# EUROPÄISCHE PATENTSCHRIFT

(11) **EP 2 145 177 B1**
(45) Veröffentlichungstag und Bekanntmachung des Hinweises auf die Patenterteilung: **12.12.2012**
(21) Anmeldenummer: 08717807.5
(22) Anmeldetag: 14.03.2008
(51) Int. Cl.: G01N 27/12, G01N 15/06

(54) **SENSOR UND VERFAHREN ZUR DETEKTION VON TEILCHEN IN EINEM GASSTROM**
SENSOR AND METHOD FOR DETECTING PARTICLES IN A GAS FLOW
DETECTEUR ET PROCEDE DE DETECTION DE PARTICULES DANS UN FLUX DE GAZ

(30) Priorität: 10.05.2007 DE 102007021912
(43) Veröffentlichungstag der Anmeldung: 20.01.2010
(73) Patentinhaber: ROBERT BOSCH GMBH, 70442 Stuttgart (DE)
(72) Erfinder: BARTSCHERER, Peter, 66125 Dudweiler (DE); SCHMIDT, Ralf, 70839 Gerlingen (DE)
(86) Internationale Anmeldenummer: PCT/EP2008/053064
(87) Internationale Veröffentlichungsnummer: WO 2008/138659

(56) Entgegenhaltungen:
- EP-A- 0 193 015
- WO-A-84/03147
- WO-A-2004/097392
- WO-A-2006/077198
- DE-A1- 10 149 333
- DE-A1-102004 059 650
- DE-A1-102005 030 134
- US-A1- 2005 279 084

## Beschreibung

Die Erfindung betrifft ein Messgerät und ein Verfahren zur Detektion von Teilchen in einem Gasstrom.

### Stand der Technik

Aus dem Stand der Technik ist bekannt, dass die Konzentration von leitfähigen Teilchen, beispielsweise Rußpartikeln in einem Abgas durch Messung der durch Teilchenanlagerung hervorgerufenen Änderung der elektrischen Eigenschaften von zwei oder mehreren kammartig ineinander greifenden metallischen Elektroden (interdigitales Elektrodensystem) gemessen werden kann. Eine steigende Konzentration der sich auf der Sensoroberfläche anlagernden Teilchen führt zu einer Widerstands- bzw. Spannungsabnahme zwischen den Elektroden. Bei einer konstant angelegten Spannung geht dies mit einer Zunahme des Stromflusses einher. Zur Bestimmung der Teilchenkonzentration bzw. des Teilchenmassenstroms wird die Änderung des Stromes bzw. des Widerstandes des Elektrodensystems gemessen und mit der angelagerten Teilchenmasse korreliert. Alternativ dazu kann die angelagerte Teilchemnasse auch durch die Definition eines Schwellwertes (Auslöseschwelle) und Messung einer Sammelzeit bis zum Erreichen dieses Schwellwertes bestimmt werden. Sensoren, die auf einem derartigen Prinzip beruhen, welches als sammelndes Prinzip einzuordnen ist, werden als resistive Partikelsensoren bezeichnet. Zur Regeneration des Sensorelementes wird das Sensorelement bisher mit Hilfe einer Heizvorrichtung von den angelagerten Teilchen befreit. Derartige Sensoren werden von der DE 101 493 33 A1 sowie der WO 2003006976 A2 beschrieben.

Die Leiterbahnen der Heizvorrichtung und der Temperatunnessvorrichtung bestehen meist aus Platin, was mit hohen Materialkosten verbunden ist. Zudem sind Teilchensensoren üblicherweise aus mehrlagigen, mindestens zwei Schichten umfassenden, Keramikstrukturen aufgebaut, welche ebenfalls mit hohen Materialkosten und zudem hohen Herstellungskosten verbunden sind. Weiterhin umfassen herkömmliche Sensoren meist fünf Kontakte zur Verbindung des Elektrodensystems, der Heizvorrichtung und einer Temperaturvorrichtung mit einer Mess- und Steuerelektronik, wodurch auch ein meist fünfadriger Kabelbaum benötigt wird.

Aus der DE 10 2005 030 134 A1 ist bereits ein Sensor zur Detektion von Teilchen, insbesondere Rußpartikel, in einem Gasstrom bekannt, der ein Elektrodensystem mit mindestens zwei Elektroden und einer elektrisch leitfähigen Schicht umfasst. Dieser Sensor wird nach dem folgenden Verfahren betrieben. Zuerst wird eine erste Betriebstemperatur am Sensor für eine Messphase eingestellt, so dass sich Ruß auf der Substratoberfläche ablagern kann, jedoch weitere die Rußmessung störende Ablagerungen verhindert werden. Von Messbeginn bis zum Auftreten einer erhöhten Leitfähigkeit zwischen den Elektroden des Sensors wird entsprechend die Zeit aufgenommen. Am Sensor wird nachfolgend eine zweite Betriebstemperatur für eine Regenerationsphase eingestellt, so dass der abgelagerte Ruß mit im Messgas vorhandenen Sauerstoff verbrannt wird.

Auch aus den Druckschriften WO 2004/097392 A1 und DE 10 2004 059 650 A1 gehen bereits nach einem resistiven Messprinzip arbeitende Partikelsensoren zur Detektion von Teilchen, insbesondere von Rußteilchen im Abgasstrang von Brennkraftmaschinen hervor.

Aus der DE 101 49 333 A1 ist ein weiterer nach einem resistiven Messprinzip arbeitender Partikelsensor bekannt.

### Offenbarung der Erfindung

### Vorteile der Erfindung

Das erfindungsgemäße Verfahren zur Detektion von Teilchen in einem Gasstrom mit einem Sensor zeichnet sich in vorteilhafter Weise dadurch aus, dass aufgrund des spezifischen Aufbaus des Sensors an das Elektrodensystem eine Spannung angelegt wird, so dass das Elektrodensystem bestehend aus zwei Elektroden und eine zusätzliche elektrisch leitfähige Schicht in Abhängigkeit von der an das Elektrodensystem angelegten Spannung sowohl als Messvorrichtung zur Detektion von Teilchen in einem Gasstrom als auch als Heizvorrichtung zur Regeneration des Sensors (11) und als Temperaturmessvorrichtung zur Bestimmung der Temperatur des Sensors (11) betrieben werden kann. Auf diese Weise kann auf eine Heizeinrichtung am Sensor verzichtet werden.

Ein erfindungsgemäßer Sensor zur Detektion von Teilchen in einem Gasstrom, der ein Elektrodensystem mit mindestens zwei Elektroden und eine elektrisch leitfähige Schicht umfasst und dadurch gekennzeichnet ist, dass die elektrisch leitfähige Schicht mindestens zwei Elektroden des Elektrodensystems elektrisch leitend kontaktiert und die elektrisch leitfähige Schicht bei Raumtemperatur einen Widerstandswert von ≥ 0,2 kΩ bis ≤ 100 MΩ aufweist, hat den Vorteil, dass Material-, Herstellung- und Systemkosten gesenkt werden können. Dies liegt darin begründet, dass durch das Vermeiden einer separaten Heiz- und/oder Temperatunnessvorrichtung kostenintensives Platin eingespart, die Anzahl der Kontakte und Keramikschichten reduziert und somit der Aufbau des Sensors vereinfacht wird. Beispielsweise kann bei einem erfindungsgemäßen Sensor die Anzahl der Kontakte auf zwei bis vier Kontakte reduziert werden. Darüber hinaus findet in einem erfindungsgemäßen Sensor die zur Regeration des Sensors notwendige Wärmeentwicklung größtenteils in der Schicht statt, welche die zu regenerierende Fläche darstellt. Daher ist, im Gegensatz zu bekannten Sensoren, die Entfernung zwischen der heizenden Struktur, welche erfindungsgemäß eine elektrisch leitfähige Schicht und damit elektrisch leitend verbundene Elektroden umfasst, und der zu regenerierenden Fläche viel kleiner. Dies hat den Vorteil, dass eine gleichmäßige Erwärmung gewährleistet wird, Energiekosten, Regenerations- und Abkühlzeiten des Sensors gesenkt werden sowie die Messbereitschaft des Sensors erhöht wird.

Der erfindungsgemäße Sensor kann beispielsweise in einem Abgasstrom eines Kraftfahrzeuges mit einem Dieselmotor oder einer Ölheizung oder in einem Messgerät zur Kontrolle der Luftqualität oder in einem Werkstattmessgerät zur Abgasuntersuchung eingesetzt werden. Da in naher Zukunft der Partikelausstoß, insbesondere von Fahrzeugen im Fahrbetrieb nach dem Durchlaufen eines Motors bzw. Dieselpartikelfilters (DPF), per gesetzlicher Vorschrift überwacht werden muss (On Board Diagnosis, OBD), ist die Überwachung des Partikelausstoßes von besonderem Interesse. Die vorliegende Erfindung bietet neben einer Möglichkeit einer derartigen Überwachung des Partikelausstoßes den Vorteil einer Beladungsprognose von Dieselpartikelfiltern. Eine Beladungsprognose von Dieselpartikelfiltern wird benötigt, um eine hohe Systemsicherheit auch für den Einsatz von kostengünstigen Filtermaterialien zu erreichen.

Die Anwendung des beschriebenen Sensors ist nicht auf die Detektion von Rußpartikeln in Abgasen von Verbrennungsmotoren beschränkt. Der Sensor kann allgemein zur Detektion von Teilchen, die die elektrische Leitfähigkeit der erfindungsgemäßen elektrisch leitfähigen Schicht bei Anlagerung und/oder Einlagerung verändern, beispielsweise in chemischen Herstellungsprozessen, Abluftanlagen oder Abluftnachbehandlungsanlagen, eingesetzt werden.

Weitere Vorteile und vorteilhafte Ausgestaltungen des erfindungsgemäßen Gegenstandes sind der Beschreibung, der Zeichnung und den Patentansprüchen zu entnehmen.

### Zeichnungen

Die vorliegende Erfindung wird durch die im Folgenden gezeigten und diskutierten Figuren und die nachfolgende Beschreibung genauer erläutert. Dabei ist zu beachten, dass die Figuren nur beschreibenden Charakter haben und nicht dazu gedacht sind, die Erfindung in irgendeiner Form einzuschränken.

Es zeigen
Figur 1 eine Draufsicht auf eine Ausführungsform eines erfindungsgemäßen Sensors,
Figur 2a einen Querschnitt einer ersten Ausführungsform eines erfindungsgemäßen Sensors,
Figur 2b einen Querschnitt einer zweiten Ausführungsform eines erfindungsgemäßen Sensors,
Figur 2c einen Querschnitt einer dritten Ausführungsform eines erfindungsgemäßen Sensors,
Figur 2d einen Querschnitt einer vierten Ausführungsform eines erfindungsgemäßen Sensors,
Figur 2e einen Querschnitt einer fünften Ausführungsform eines erfindungsgemäßen Sensors,

### Beschreibung der Zeichnungen

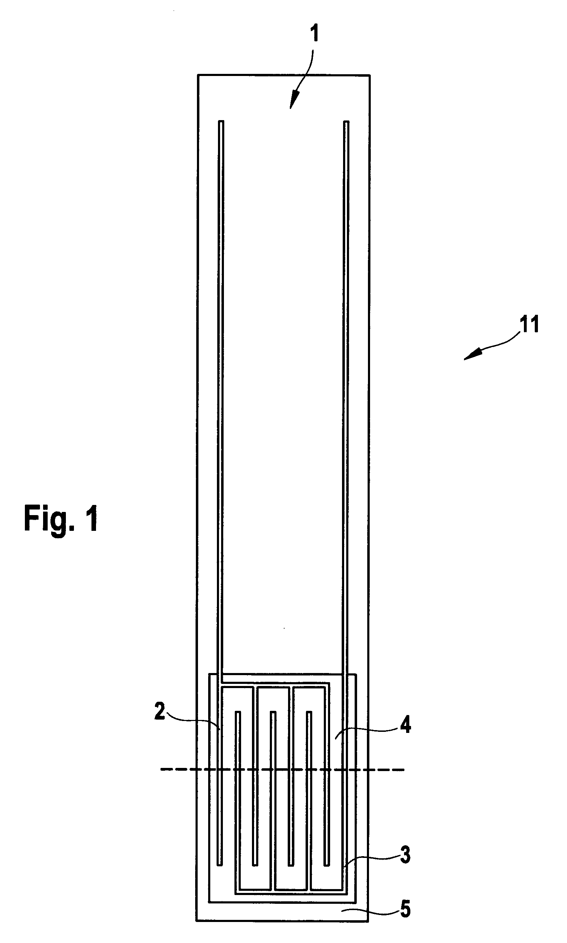

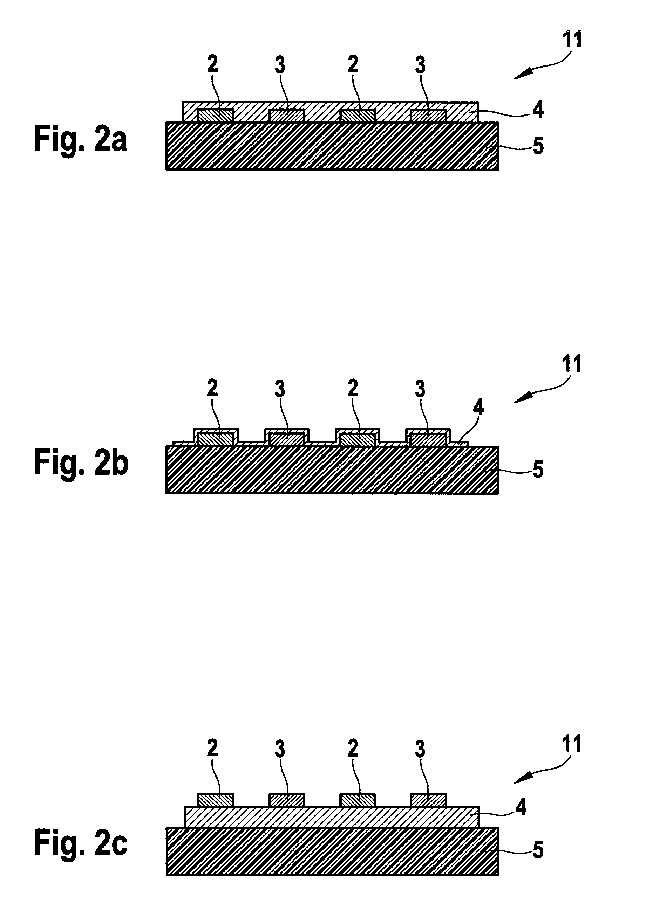

Figur 1 zeigt eine Draufsicht auf eine Ausführungsform eines erfindungsgemäßen Sensors 11 umfassend ein Elektrodensystem 1 mit zwei kammartig ineinander greifenden Elektroden (Interdigitalelektroden) 2, 3, eine elektrisch leitfähige Schicht 4 und ein Trägerelement 5. Die Elektroden 2, 3 weisen jeweils mehrere Elektrodenfinger auf. Dabei weisen die Elektrodenfinger der einen Elektrode 2 das gleiche elektrische Potential. Entsprechendes gilt für die Elektrodenfinger der Elektrode 3. Zwischen den Elektrodenfingergruppen der Elektroden 2 und 3 besteht hingegen eine Potentialdifferenz. Das Elektrodensystem 1 und die elektrisch leitfähige Schicht 4 des Sensors 11 dienen in Abhängigkeit von einer an das Elektrodensystem angelegten Spannung als Messvorrichtung zur Detektion von Teilchen in einem Gasstrom und/oder als Heizvorrichtung zur Regeneration des Sensors und/oder als Temperaturmessvorrichtung zur Bestimmung der Temperatur des Sensors. Während des Betriebs als Messvorrichtung wird an die Elektroden 2, 3 eine Messspannung angelegt. Durch das resultierende elektrische Feld lagern sich vermehrt Teilchen an und schließen mit steigernder Teilchenzahl die Elektroden 2, 3 kurz, wobei aus dem damit einhergehenden Spannungsabfall Rückschlüsse auf die Teilchenmenge gezogen werden können. Wenn die Menge der angelagerten Teilchen einen Schwellwert erreicht, wird der Sensor durch Heizen von den angelagerten Teilchen befreit bzw. regeneriert. Zur Regeneration wird eine Regenerationsspannung, die deutlich höher ist als die Messspannung, an die Elektroden 2, 3 des Elektrodensystems 1 angelegt, die einen zur Heizung ausreichenden Strom durch die elektrisch leitfähige Schicht 4 hervorruft und damit die zur Regeneration des Sensors benötigte Heizleistung und hohen Temperaturen realisiert. Darüber hinaus lassen sich, wenn das Elektrodensystem 1 und die elektrisch leitfähige Schicht 4, beispielsweise nach der Regeneration, frei von angelagerten Teilchen sind, nach einer zuvor durchgeführten Kalibrierung, aus dem Temperaturverhalten des Widerstands des Elektrodensystem 1 und der elektrisch leitfähigen Schicht 4, Rückschlüsse auf die Temperatur des Sensors ziehen und das Elektrodensystem 1 und die elektrisch leitfähige Schicht 4 können somit als Temperaturmessvorrichtung dienen. Die in Figur 1 gezeigt gestrichelte Linie markiert die Stelle der in den Figuren 2a bis 2e gezeigten Querschnitte.

Figur 2a zeigt einen Querschnitt einer ersten Ausführungsform eines erfindungsgemäßen Sensors 11 umfassend ein Elektrodensystem 1 mit zwei kammartig ineinander greifenden Elektroden 2, 3, eine elektrisch leitfähige Schicht 4 und ein Trägerelement 5. Im Rahmen dieser Ausführungsform ist die elektrisch leitfähige Schicht 4 über dem Elektrodensystem 1 angeordnet und füllt die Bereiche zwischen den einzelnen Fingern der Elektroden 2, 3 des Elektrodensystems 1 aus, sodass die elektrisch leitfähige Schicht 4 gemeinsam mit den Elektroden 2, 3 des Elektrodensystems 1 eine einheitliche Schicht darstellen.

Figur 2b zeigt einen Querschnitt einer zweiten Ausführungsform eines erfindungsgemäßen Sensors 11 umfassend ein Elektrodensystem 1 mit zwei kammartig ineinander greifenden Elektroden 2, 3, eine elektrisch leitfähige Schicht 4 und ein Trägerelement 5. Im Rahmen dieser Ausführungsform ist die elektrisch leitfähige Schicht 4 ebenfalls über dem Elektrodensystem 1 angeordnet. Jedoch füllt die elektrisch leitfähige Schicht 4 die Bereiche zwischen den einzelnen·Fingern der Elektroden 2, 3 des Elektrodensystems 1 nicht wie in Fig. 2a vollständig aus, sondern folgt der durch die Elektroden 2, 3 des Elektrodensystems 1 vorgegebenen Kontur.

Figur 2c zeigt einen Querschnitt einer dritten Ausführungsform eines erfindungsgemäßen Sensors 11 umfassend ein Elektrodensystem 1 mit zwei kammartig ineinander greifenden Elektroden 2, 3, eine elektrisch leitfähige Schicht 4 und ein Trägerelement 5. Im Rahmen dieser Ausführungsform ist die elektrisch leitfähige Schicht 4 unter dem Elektrodensystem 1 angeordnet.

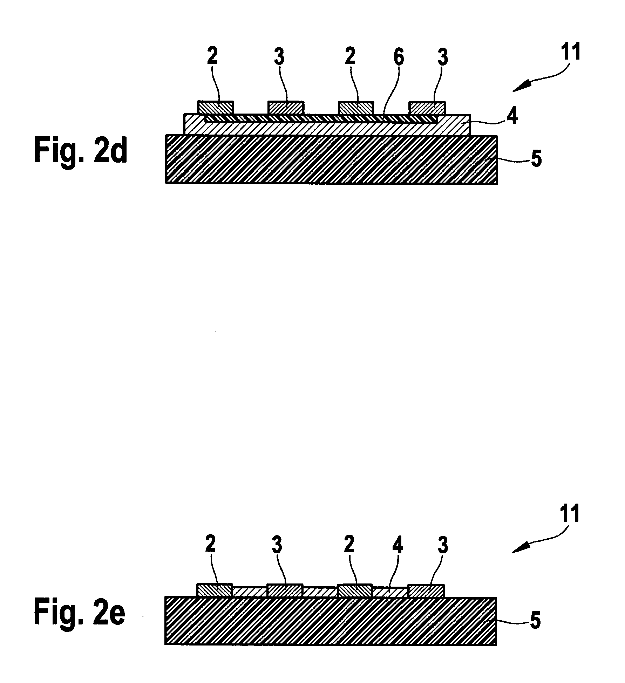

Figur 2d zeigt einen Querschnitt einer vierten Ausführungsform eines erfindungsgemäßen Sensors 11 umfassend ein Elektrodensystem 1 mit zwei kammartig ineinander greifenden Elektroden 2, 3, eine elektrisch leitfähige Schicht 4, ein Trägerelement 5 und eine isolierende Schicht 6. Im Rahmen dieser Ausführungsform ist die elektrisch leitfähige Schicht 4 ebenfalls unter dem Elektrodensystem 1 angeordnet, jedoch ist in die elektrisch leitfähige Schicht 4 eine isolierende Schicht 6 eingebettet, welche die elektrisch leitfähige Schicht 4 teilweise elektrisch von den Elektroden 2, 3 trennt. Dabei ist die isolierende Schicht 6 derart angeordnet, dass sie die innen liegenden Finger der Elektroden 2, 3 des Elektrodensystems 1 vollständig von der elektrisch leitfähigen Schicht 4 trennt, den äußeren Fingern, die jeweils zu unterschiedlichen Elektroden 2, 3 gehören, den Kontakt mit der elektrisch leitfähigen Schicht 4 jedoch ermöglicht. Obwohl die Summe der Finger der Elektroden 2, 3 des Elektrodensystems 1 im Allgemeinen sowohl einer geraden als auch ungraden Zahl entsprechen kann, ist es von Vorteil, wenn die Summe der Finger der Elektroden 2, 3 des Elektrodensystems 1 einer geraden Zahl entspricht, da die elektrisch leitfähige Schicht 4 über die äußeren Elektrodenfinger kontaktiert und eine gleichmäßige Erwärmung, insbesondere auch an den Rändern, gewährleistet werden kann. Auf diese Weise kann trotz der Anwesenheit einer isolierenden Schicht 6 beim Anlegen einer hohen Spannung an die Elektroden 2, 3 des Elektrodensystems 1 ein zum Erzeugen der Heiztemperatur notwendiger Strom von einer Elektrode 2, 3 durch die elektrisch leitfähige Schicht 4 zu der anderen Elektrode 2, 3 fließen.

Figur 2e zeigt einen Querschnitt einer fünften Ausführungsform eines erfindungsgemäßen Sensors 11 umfassend ein Elektrodensystem 1 mit zwei kammartig ineinander greifenden Elektroden 2, 3, eine elektrisch leitfähige Schicht 4 und ein Trägerelement 5. Im Rahmen dieser Ausführungsform ist die elektrisch leitfähige Schicht 4 zwischen den Fingern der Elektroden 2, 3 des Elektrodensystems 1 angeordnet.

Gegenstand der vorliegenden Erfindung ist ein Sensor zur Detektion von Teilchen in einem Gasstrom gemäß dem Anspruch 8.

Dabei werden unter dem Begriff "Teilchen" im Sinn der vorliegenden Erfindung feste und/oder flüssige leitfähige Teilchen, beispielsweise leitfähige Partikel und/oder Tröpfchen, insbesondere Rußpartikel, verstanden.

Dabei wird der Widerstandswert der elektrisch leitfähigen Schicht durch Vergleich des Widerstandswertes eines mit Teilchen beladenen Sensorelementes ohne elektrisch leitfähige Schicht mit dem Widerstandswert eines unbeladenen Sensorelementes mit elektrisch leitfähiger Schicht, welches den gleichen Aufbau wie das Sensorelement ohne elektrisch leitfähige Schicht aufweist, ermittelt, wobei die Widerstandswerte in beiden Fällen durch das gleiche Messprinzip bestimmt werden.

Da der Widerstandswert der elektrisch leitfähigen Schicht von der Geometrie des Elektrodensystems abhängig ist, muss die Ausgestaltung der elektrisch leitfähigen Schicht und die Auswahl des elektrisch leitfähigen Materials auf das entsprechende Elektrodensystem angepasst werden.

Dies kann zum einen empirisch erfolgen, das heißt indem zunächst eine elektrisch leitfähige Schicht eines elektrisch leitfähigen Materials mittels Siebdruckverfahren aufgetragen, gegebenenfalls gesintert, und der resultierende Widerstandswert gemessen wird. Falls der Widerstandswert der elektrisch leitenden Schicht nicht in dem erfindungsgemäßen Widerstandsbereich liegt, kann beispielsweise einerseits das elektrisch leitfähige Material verändert werden oder andererseits die Schichtdicke durch das Auftragen weiteren elektrisch leitfähigen Materials sukzessiv vergrößert werden bis ein Widerstandswert, der in dem erfindungsgemäßen Widerstandsbereich liegt, erreicht wird. Zum anderen kann die Ausgestaltung einer elektrisch leitfähigen Schicht mit einem erfindungsgemäßen Widerstandswert zumindest näherungsweise über mathematische Methoden bestimmt werden.

Die elektrisch leitfähige Schicht kann bei Raumtemperatur einen Widerstandswert von ≥ 0,3 kΩ bis ≤ 10 MΩ, beispielsweise von ≥ 0,4 kΩ bis ≤ 1 MΩ oder von ≥ 0,5 kΩ bis ≤ 500 kΩ, insbesondere von ≥ 10 kΩ bis ≤ 150 kΩ, aufweisen.

Vorzugsweise wird der Widerstandswert der elektrisch leitfähigen Schicht derart gewählt, dass der Widerstandswert eines mit der elektrisch leitfähigen Schicht versehenen Sensors dem Minimalwiderstandswert eines mit den zu detektierenden Teilchen beladenen Sensors gleicher Geometrie ohne elektrisch leitfähige Schicht kurz vor Beginn der Regeneration entspricht.

Der Minimalwiderstandswert der zu detektierenden Teilchen lässt sich durch die Anlagerungsspannung eines Teilchensensors ohne elektrisch leitfähige Schicht und den Wert des Stromflusses, der kurz vor der Regeneration durch die Teilchen fließt bestimmen.

Beispielsweise, wenn bei einem herkömmlichen Rußsensor ohne elektrisch leitfähige Schicht bei einer Anlagerungsspannung von 30 V ein Stromfluss durch die Rußteilchen von bis zu einigen mA, insbesondere von 1 mA, vorliegt, ergibt sich aus 30 V und 1 mA ein minimaler Rußwiderstand von 30 kΩ. Im Fall eines derartigen Sensors könnte die elektrisch leitfähige Schicht beispielsweise einen Widerstandswert von 30 kΩ aufweisen. Bei der Teilchenmessung wird der Rußteilchenwiderstand dem Widerstand der elektrisch leitfähigen Schicht parallel geschaltet, sodass sich ein Gesamtwiderstand von 15 kΩ ergibt, was bei einem Gesamtstromfluss von 2 mA eine Leistung von 0,06 W zur Folge hat. Diese Leistung reicht jedoch nicht aus, um die Rußteilchen zu desorbieren und/oder zu verbrennen.

Daher beeinflusst eine erfindungsgemäße elektrisch leitfähige Schicht die eigentliche Teilchenmessung nicht oder kaum; jedoch kann die elektrisch leitfähige Schicht im später erläuterten erfindungsgemäßen Verfahren beim Anlegen einer höheren Spannung dazu genutzt werden, die Teilchen zu desorbieren und/oder zu verbrennen.

Darüber hinaus fungiert eine elektrisch leitfähige Schicht mit einem Widerstandswert der dem Minimalwiderstandswert der zu detektierenden Teilchen entspricht nicht als Strombegrenzung, weshalb der Signalhub eines erfindungsgemäßen Sensors in etwa dem Signalhub eines unbeschichteten Sensors entspricht.

Im Rahmen der vorliegenden Erfindung ist die elektrisch leitfähige Schicht beispielsweise über, unter und/oder zwischen den Elektroden des Elektrodensystems angeordnet.

Dabei kann die elektrisch leitfähige Schicht über dem Elektrodensystem angeordnet sein und die Bereiche zwischen den Elektroden, insbesondere den Elektrodenfingern, des Elektrodensystems vollständig ausfüllen, sodass die elektrisch leitfähige Schicht gemeinsam mit den Elektroden des Elektrodensystems eine einheitliche Schicht ausbildet. Die elektrisch leitfähige Schicht kann jedoch auch über dem Elektrodensystem angeordnet sein und der durch die Elektroden des Elektrodensystems vorgegebenen, beispielsweise burgzinnen-förmigen, Kontur folgen.

Ist die elektrisch leitfähige Schicht unter dem Elektrodensystem angeordnet, so kann die elektrisch leitfähige Schicht eine einheitliche Schicht unter dem Elektrodensystem ausbilden oder das Elektrodensystem kann zumindest teilweise in den oberen Bereich der darunter liegenden elektrisch leitfähigen Schicht eingebettet sein.

Die elektrisch leitfähige Schicht kann jedoch auch ausschließlich zwischen den Elektroden, insbesondere den Elektrodenfingern, des Elektrodensystems angeordnet sein. Obwohl im Rahmen der vorliegenden Erfindung die Summe von Elektrodenfingern der Elektroden des Elektrodensystems im Allgemeinen sowohl einer geraden als auch ungraden Zahl entsprechen kann, ist es von Vorteil, wenn die Summe von Elektrodenfinger der Elektroden des Elektrodensystems einer geraden Zahl entspricht. Dies liegt darin begründet, dass die elektrisch leitfähige Schicht über die äußeren Elektrodenfinger kontaktiert und eine gleichmäßige Erwärmung, insbesondere auch an den Rändern, gewährleistet werden kann. Im Rahmen einer Ausführungsform der vorliegenden Erfindung weisen die Elektroden des Elektrodensystems daher eine gerade Anzahl von Elektrodenfingern auf.

Beispielsweise weist die elektrisch leitfähige Schicht eine spezifische elektrische Leitfähigkeit bei Raumtemperatur von ≥ 10⁻⁵ S/m bis ≤ 10 S/m, beispielsweise von ≥ 10⁻⁴ S/m bis ≤ 1 S/m insbesondere von ≥ 10⁻³ S/m bis ≤ 10⁻¹ S/m, auf.

Beispielsweise umfasst die elektrisch leitfähige Schicht dotiertes Zirkoniumoxid oder undotiertes Zirkoniumoxid mit einer Korngröße im nm-Bereich, dotiertes Aluminiumoxid, dotiertes oder undotiertes Rutheniumoxid, dotiertes oder undotiertes Indiumoxid, Siliciumcarbid, nitridgebundenes Siliciumcarbid, nitridgebundenes Siliciumaluminiumcarbid und/oder ein Delafossit. Insbesondere umfasst die elektrisch leitfähige Schicht undotiertes Zirkoniumdioxid mit einer Korngröße im nm-Bereich oder Yttrium-dotiertes Zirkoniumdioxid, Fe₂O₃-, MnO- und/oder MgO-dotiertes Aluminiumoxid, Rutheniumdioxid, zinndotiertes Indiumoxid (beispielsweise In₂O₃:SnO₂), Siliciumcarbid, nitridgebundenes Siliciumcarbid, nitridgebundenes Siliciumaluminiumcarbid und/oder ein Delafossit der allgemeinen Formel AMO₂, in der A beispielsweise für Cu und/oder Ag und M beispielsweise für Al, Ga und/oder In steht.

Die mindestens zwei Elektroden des Elektrodensystems können kammartig ineinander greifen. Beispielsweise handelt es sich bei den Elektroden des Elektrodensystems um Interdigitalelektroden. Ein interdigitales Elektrodensystem aus mindestens zwei Interdigitalelektroden kann auf einfache Weise durch Verfahren wie Siebdruckverfahren auf eine darunter liegenden Schicht, beispielsweise auf eine elektrisch leitfähige Schicht, aufgedruckt werden. Wenn es sich bei den Elektroden des Elektrodensystems um Interdigitalelektroden handelt, liegen diese daher zweckmäßigerweise in einer Ebene. Bei dem Elektrodenmaterial handelt es sich beispielsweise um Metalle wie Platin, Gold oder Kupfer, wobei Platin bevorzugt wird. Vorzugsweise weist das Elektrodensystem eine Schichtdicke in einem Bereich von ≥ 1 µm bis ≤ 100 µm, beispielsweise von ≥ 2 µm bis ≤ 50 µm, insbesondere von ≥ 5 µm bis ≤ 40 µm, auf.

Im Rahmen einer Ausführungsform der vorliegenden Erfindung umfasst der erfindungsgemäße Sensor weiterhin eine isolierende Schicht, welche die elektrisch leitfähige Schicht von den Elektroden des Elektrodensystems teilweise elektrisch trennt. Eine "isolierende Schicht" im Sinn der vorliegenden Erfindung weist bei Raumtemperatur einen elektrischen Widerstand von >> 100 MΩ auf. Beispielsweise umfasst eine erfindungsgemäße Schicht ein Material mit einer spezifischen Leitfähigkeit bei Raumtemperatur von < 10⁻⁸ S/m. Beispielsweise umfasst die erfindungsgemäße isolierende Schicht ein Aluminiumoxid, insbesondere Aluminiumdioxid. Vorzugsweise weist die isolierende Schicht eine Schichtdicke in einem Bereich von ≥ 1 µm bis ≤ 200 µm, beispielsweise von ≥ 10 µm bis ≤ 100 µm, insbesondere von ≥ 20 µm bis ≤ 60 µm, auf.

Dabei ist die isolierende Schicht beispielsweise zwischen dem Elektrodensystem und der elektrisch leitfähigen Schicht angeordnet. Die isolierende Schicht kann in die elektrisch leitfähige Schicht eingebettet sein, sodass die elektrisch leitfähige und die isolierende Schicht eine einheitliche Schicht bilden. Beispielsweise ist die isolierende Schicht derart angeordnet, dass sie die innen liegenden Finger der Elektroden des Elektrodensystems vollständig von der elektrisch leitfähigen Schicht trennt, den äußeren Fingern, die jeweils zu unterschiedlichen Elektroden gehören, den Kontakt mit der elektrisch leitfähigen Schicht jedoch ermöglicht. Auf diese Weise kann beim Anlegen einer hohen Spannung an die Elektroden des Elektrodensystems trotz der Anwesenheit einer isolierenden Schicht ein zum Erzeugen der Heiztemperatur notwendiger Strom von einer Elektrode durch die elektrisch leitfähige Schicht zu der anderen Elektrode fließen.

Im Rahmen einer weitern Ausführungsform der vorliegenden Erfindung umfasst der erfindungsgemäße Sensor weiterhin eine Trägerschicht, insbesondere eine Trägerfolie. Beispielsweise umfasst die erfindungsgemäße Trägerschicht ein Aluminiumoxid und/oder ein undotiertes oder dotiertes Zirkoniumoxid. Insbesondere umfasst die erfindungsgemäße Trägerschicht Aluminiumdioxid und/oder undotiertes oder Yttrium-dotiertes Zirkoniumdioxid. Beispielsweise weist die Trägerschicht eine Schichtdicke in einem Bereich von ≥ 100 µm bis ≤ 2,5 mm auf. Im Rahmen einer bevorzugten Ausführungsform der vorliegenden Erfindung fungiert die Trägerschicht zusätzlich als elektrisch leitfähige Schicht oder isolierende Schicht. Beispielsweise fungiert eine dotiertes oder undotiertes Zirkoniumoxid, insbesondere Zirkoniumdioxid, umfassende Trägerschicht als elektrisch leitfähige Schicht und eine Aluminiumoxid, insbesondere Aluminiumdioxid, umfassende Trägerschicht als isolierende Schicht.

Ein erfindungsgemäßer Sensor umfasst vorteilhafterweise keine separate Heizvorrichtung zur Regeneration des Sensors. Dies liegt darin begründet, dass durch das Anlegen einer hohen Spannung an die Elektroden des Elektrodensystems ein zur Heizung ausreichender Stromfluss durch die elektrisch leitfähige Schicht hervorgerufen wird, der die zur Regeneration des Sensors benötigten hohen Temperaturen realisiert. Dabei findet hauptsächlich eine Erwärmung der Elektroden und der elektrisch leitfähigen Schicht statt. Folglich wird hauptsächlich der von angelagerten Teilchen zu befreiende Bereich erwärmt, was den Vorteil hat, dass Energiekosten, Aufwärm- und Abkühlzeiten gesenkt werden und somit die Messbereitschaft des Sensors erhöht wird. Die hohen Spannungen zwischen den Elektroden des Elektrodensystems können beispielsweise durch eine Wandlerschaltung generiert werden.

Gemäß der vorliegenden Erfindung wird das Elektrodensystem in Kombination mit der elektrisch leitfähigen Schicht auch als Temperaturmessvorrichtung zur Bestimmung der Temperatur des Sensors verwendet. Dabei kann die Bestimmung der Temperatur durch eine Widerstandsmessung und Korrelation/Vergleich der gemessenen Widerstandswerte mit den im Rahmen einer zuvor durchgeführten Kalibrierung gemessenen temperaturabhängigen Widerstandswerten erfolgen. Zweckmäßigerweise sollte der Widerstandswert des Elektrodensystems und der elektrisch leitfähigen Schicht während der Temperaturmessung nicht durch andere Faktoren als die Temperatur, wie angelagerte Teilchen, beeinflusst werden. Vorzugsweise findet die Bestimmung der Temperatur des Sensors daher zu einem Zeitpunkt statt, an dem der Sensor frei von angelagerten Teilchen ist. Beispielsweise erfolgt die Bestimmung der Temperatur nach oder während der Regeneration des Sensors.

Da im Rahmen der vorliegenden Erfindung das Elektrodensystem in Kombination mit der elektrisch leitfähigen Schicht als Messvorrichtung zur Detektion von Teilchen in einem Gasstrom, als Heizvorrichtung zur Regeneration des Sensors und/oder als Temperaturmessvorrichtung zur Bestimmung der Temperatur des Sensors verwendet werden kann, werden anstelle von üblicherweise vier bis sechs Kontakten zur Verbindung einer Messvorrichtung, einer separate Heizvorrichtung und/oder einer Temperaturmessvorrichtung mit einer Spannungsversorgungs-, Spannungsmess-, Strommess- und/oder Steuervorrichtung nur zwei Kontakte für den Betrieb des Elektrodensystems und der elektrisch leitfähigen Schicht als Messvorrichtung, Heizvorrichtung und/oder Temperaturmessvorrichtung benötigt.

Vorteilhafterweise wird daher in einem erfindungsgemäßen Sensor an das Elektrodensystem eine Spannung angelegt, sodass das Elektrodensystem und die elektrisch leitfähige Schicht in Abhängigkeit von der an das Elektrodensystem angelegten Spannung
- als Messvorrichtung zur Detektion von Teilchen in einem Gasstrom und/oder
- als Heizvorrichtung zur Regeneration des Sensors und/oder
- als Temperaturmessvorrichtung zur Bestimmung der Temperatur des Sensors dienen.
Es ist im Rahmen einer weiteren Ausführungsform der Erfindung jedoch ebenso möglich, dass der erfindungsgemäße Sensor eine, insbesondere separate, Temperaturmessvorrichtung umfasst.

Ein weiterer Gegenstand der vorliegenden Erfindung ist ein Verfahren zur Detektion von Teilchen in einem Gasstrom gemäß dem Anspruch 1.

Im Rahmen einer bevorzugten Ausführungsform des erfindungsgemäßen Verfahrens werden in einer an die Messphase anschließenden Regenerationsphase die angelagerten Teilchen teilweise oder vollständig entfernt, indem an das Elektrodensystem eine Regenerationsspannung angelegt wird, die höher als die Messspannung ist.

Dabei beruht die Erfindung auf dem Prinzip, dass sich durch das Anlegen einer hohen Regenerationsspannung ein Stromfluss durch die elektrisch leitfähige Schicht einstellt, der ausreicht, die elektrisch leitfähige Schicht so stark zu erwännen, dass die angelagerten Teilchen teilweise oder vollständig entfernt, insbesondere desorbiert und/oder verbrannt, werden.

Vorteilhafterweise werden die Messphase und die Regenerationsphase alternierend wiederholt werden.

Im Rahmen einer bevorzugten Ausführungsform des erfindungsgemäßen Verfahrens ist die Regenerationsspannung 10- bis 1000-mal, beispielsweise 20- bis 500-mal oder 50- bis 150-mal, insbesondere 80- bis 120-mal, höher als die Messspannung.

Vorzugsweise wird die Höhe der Regenerationsspannung so eingestellt, dass die durch das Anlegen der Regenerationsspannung umgesetzte Regenerationsleistung 100- bis 1.000.000-mal, beispielsweise 400- bis 250.000-mal oder 2500- bis 22500-mal, insbesondere 6400- bis 14400-mal, höher ist als die am Ende der Messphase bei angelegter Messspannung umgesetzte Messleistung.

In der Messphase ist zu beachten, dass eine Messspannung angelegt wird, die nicht ausreicht angelagerte Teilchen durch Erwännung zu entfernen. Zweckmäßigerweise kann die Messspannung in einem Bereich von ≥ 0,1 V bis ≤ 100 V, beispielsweise in einem Bereich von ≥ 1 V bis ≤ 80 V, insbesondere in einem Bereich von ≥ 25 V bis ≤ 60 V liegen. Die am Ende der Messphase bei angelegter Messspannung umgesetzte Messleistung kann in einem Bereich von ≥ 0,001 mW bis ≤ 200 mW, beispielsweise in einem Bereich von ≥ 0,005 mW bis ≤ 100 mW, insbesondere in einem Bereich ≥ 0,01 mW bis ≤ 60 mW, liegen.

Da sich die elektrisch Leitfähigkeit und der elektrische Widerstand der elektrisch leitfähigen Schicht aufgrund von äußeren Einflüssen, wie Temperatur und Alterung des Schichtmaterials, verändern, wird im Rahmen einer bevorzugten Ausführungsform der Erfindung die Höhe der Regenerationsspannung dahingehend variiert, dass das Verhältnis der Regenerationsleistung zur Messleistung konstant ist.

Im Rahmen einer weiteren Ausführungsform der vorliegenden Erfindung kann, um die Temperatur, beispielsweise zur Begrenzung der Regenerationstemperatur, zu bestimmen, während der Regenerationsphase eine Widerstandsmessung durchgeführt und der daraus resultierende Widerstandswert mit einer zuvor durchgeführten Temperaturabhängigkeitsuntersuchung des Widerstandes verglichen werden.

Ein weiterer Gegenstand der vorliegenden Erfindung ist die Verwendung eines erfindungsgemäßen Sensors und/oder die Durchführung eines erfindungsgemäßen Verfahrens in einem Werkstattmessgerät zur Abgasuntersuchung oder in einem Messgerät zur Kontrolle der Luftqualität oder zur Überwachung der Betriebsweise eines Verbrennungsmotors, beispielsweise eines Dieselmotors, oder einer Verbrennungsanlage, beispielsweise einer Ölheizung, oder zur Überwachung der Funktionsfähigkeit eines Partikelfilters und/oder des Beladungszustandes eines Partikelfilters oder zur Überwachung von chemischen Herstellungsprozessen, Abluftanlagen und/oder Abluftnachbehandlungsanlagen.

## Patentansprüche

1. Verfahren zur Detektion von Teilchen in einem Gasstrom mit einem Sensor (11), der folgenden Aufbau besitzt:
- ein Elektrodensystem (1) mit mindestens zwei Elektroden (2, 3),
- eine elektrisch leitfähige Schicht (4), wobei
- die elektrisch leitfähige Schicht (4) mindestens zwei Elektroden (2, 3) des Elektrodensystems (1) elektrisch leitend kontaktiert und
- die elektrisch leitfähige Schicht (4) bei Raumtemperatur einen Widerstandswert von ≥ 0,2 kΩ bis ≤ 100 MΩ aufweist,
**dadurch gekennzeichnet,**
**dass** an das Elektrodensystem (1) eine Spannung angelegt wird, so dass das Elektrodensystem (1) und die elektrisch leitfähige Schicht (4) in Abhängigkeit von der an das Elektrodensystem (1) angelegten Spannung
- als Messvorrichtung zur Detektion von Teilchen in einem Gasstrom und
- als Heizvorrichtung zur Regeneration des Sensors (11) und
- als Temperaturmessvorrichtung zur Bestimmung der Temperatur des Sensors (11) betrieben wird.

2. Verfahren nach Anspruch 1, **dadurch gekennzeichnet, dass** in einer Messphase an das Elektrodensystem (1) eine Messspannung angelegt wird und der sich durch Anlagerung von Teilchen einstellende Stromfluss, Spannungsabfall und/oder elektrische Widerstand gemessen und als Maß für die Konzentration und/oder den Massenstrom der Teilchen ausgegeben wird.

3. Verfahren nach Anspruch 2, **dadurch gekennzeichnet, dass** in einer an die Messphase anschließenden Regenerationsphase die angelagerten Teilchen teilweise oder vollständig entfernt werden, indem an das Elektrodensystem (1) eine Regenerationsspannung angelegt wird, die höher als die Messspannung ist.

4. Verfahren nach Anspruch 3, **dadurch gekennzeichnet, dass** die Regenerationsspannung 10- bis 1000-mal höher als die Messspannung ist.

5. Verfahren nach einem der vorherigen Ansprüche, **dadurch gekennzeichnet, dass** die Höhe der Regenerationsspannung so eingestellt wird, dass die durch das Anlegen der Regenerationsspannung umgesetzte Regenerationsleistung 100- bis 1.000.000-mal höher ist als die am Ende der Messphase bei angelegter Messspannung umgesetzte Messleistung.

6. Verfahren nach einem der vorherigen Ansprüche, **dadurch gekennzeichnet, dass** die Höhe der Regenerationsspannung dahingehend variiert wird, dass das Verhältnis der Regenerationsleistung zur Messleistung konstant ist.

7. Verfahren nach einem der vorherigen Ansprüche, **dadurch gekennzeichnet, dass** nach dem teilweisen oder vollständigen Entfernen der angelagerten Teilchen in der Regenerationsphase eine Widerstandsmessung durchgeführt wird und der daraus resultierende Widerstandswert mit einer zuvor durchgeführten Temperaturabhängigkeitsuntersuchung des Widerstandes verglichen wird, um die Temperatur zu bestimmen.

8. Messgerät zur Detektion von Teilchen in einem Gasstrom umfassend
- ein Sensor (11) wobei der Sensor
- ein Elektrodensystem (1) mit mindestens zwei Elektroden (2, 3) und
- eine elektrisch leitfähige Schicht (4) aufweist, wobei
- die elektrisch leitfähige Schicht (4) mindestens zwei Elektroden (2, 3) des Elektrodensystems (1) elektrisch leitend kontaktiert und
- die elektrisch leitfähige Schicht (4) bei Raumtemperatur einen Widerstandswert von >= 0,2 kΩ bis <= 100 MΩ aufweist
- Mittel zur Anlegung einer Spannung an das Elektrodensystem des Sensors, **dadurch gekennzeichnet,**
**dass** das Messgerät Mittel zur Heizung zur Regeneration des Sensors und Mittel zur Temperaturmessung zur Bestimmung der Temperatur des Sensors aufweist, wobei die Heizung erzielt wird durch die Anlegung einer Regenerationsspannung an das Elektrodensystem (1) und wobei die Temperaturmessung erzielt wird durch die Messung des Widerstandswerts des Elektrodensystems (1).

9. Messgerät nach Anspruch 8, **dadurch gekennzeichnet, dass** die elektrisch leitfähige Schicht (4) dotiertes Zirkoniumoxid oder undotiertes Zirkoniumoxid mit einer Korngröße im nm-Bereich, dotiertes Aluminiumoxid, dotiertes oder undotiertes Rutheniumoxid, dotiertes oder undotiertes Indiumoxid, Siliciumcarbid, nitridgebundenes Siliciumcarbid, nitridgebundenes Siliciumaluminiumcarbid und/oder ein Delafossit umfasst.

10. Messgerät nach Anspruch 8 oder 9, **dadurch gekennzeichnet, dass** der Sensor (11) weiterhin eine isolierende Schicht (6) umfasst, welche die elektrisch leitfähige Schicht (4) von den Elektroden (2, 3) des Elektrodensystems (1) teilweise elektrisch trennt.

11. Messgerät nach einem der Ansprüche 8 bis 10, **dadurch gekennzeichnet, dass** die Elektroden (2, 3) des Elektrodensystems (1) eine gerade Anzahl von Elektrodenfingern aufweisen.

## Claims

1. Method for detecting particles in a gas stream using a sensor (11) which has the following structure:
- an electrode system (1) with at least two electrodes (2, 3),
- an electrically conductive layer (4), with
- the electrically conductive layer (4) making electrically conductive contact with at least two electrodes (2, 3) of the electrode system (1),
- the electrically conductive layer (4) having a resistance value of from ≥ 0.2 kΩ to ≤ 100 MΩ at room temperature,
**characterized**
**in that** a voltage is applied to the electrode system (1), so that the electrode system (1) and the electrically conductive layer (4) are operated as a function of the voltage which is applied to the electrode system (1)
- as a measurement apparatus for the purpose of detecting particles in a gas stream and
- as a heating apparatus for the purpose of regenerating the sensor (11) and
- as a temperature measurement apparatus for the purpose of determining the temperature of the sensor (11).

2. Method according to Claim 1, **characterized in that** a measurement voltage is applied to the electrode system (1) in a measurement phase, and the current flow which is produced by virtue of the accumulation of particles, the voltage drop and/or the electrical resistance is measured and output as a measure of the concentration and/or the mass flow of the particles.

3. Method according to Claim 2, **characterized in that** some or all of the accumulated particles are removed in a regeneration phase, which follows the measurement phase, by a regeneration voltage being applied to the electrode system (1), the said regeneration voltage being higher than the measurement voltage.

4. Method according to Claim 3, **characterized in that** the regeneration voltage is 10 to 1000 times higher than the measurement voltage.

5. Method according to one of the preceding claims, **characterized in that** the level of the regeneration voltage is set such that the regeneration power which is implemented by applying the regeneration voltage is 100 to 1,000,000 times higher than the measurement power which is implemented at the end of the measurement phase when the measurement voltage is applied.

6. Method according to one of the preceding claims, **characterized in that** the level of the regeneration voltage is varied such that the ratio between the regeneration power and the measurement power is constant.

7. Method according to one of the preceding claims, **characterized in that**, after some or all of the accumulated particles are removed in the regeneration phase, a resistance measurement is carried out and the resulting resistance value is compared with a temperature dependency investigation of the resistance which was carried out previously, in order to determine the temperature.

8. Measurement device for detecting particles in a gas stream, comprising
- a sensor (11), wherein the sensor
- has an electrode system (1) with at least two electrodes (2, 3) and
- an electrically conductive layer (4), wherein
- the electrically conductive layer (4) makes electrically conductive contact with at least two electrodes (2, 3) of the electrode system (1), and
- the electrically conductive layer (4) has a resistance value of from ≥ 0.2 kΩ to ≤ 100 MΩ at room temperature,
- means for applying a voltage to the electrode system of the sensor,
**characterized**
**in that** the measurement device has heating means for the purpose of regenerating the sensor and means for temperature measurement for the purpose of determining the temperature of the sensor, with the heating being achieved by a regeneration voltage being applied to the electrode system (1), and with the temperature measurement being achieved by the resistance value of the electrode system (1) being measured.

9. Measurement device according to Claim 8, **characterized in that** the electrically conductive layer (4) comprises doped zirconium oxide or undoped zirconium oxide with a particle size in the nm range, doped aluminium oxide, doped or undoped ruthenium oxide, doped or undoped indium oxide, silicon carbide, nitride-bound silicon carbide, nitride-bound silicon aluminium carbide and/or a delafossite.

10. Measurement device according to Claim 8 or 9, **characterized in that** the sensor (11) also comprises an insulating layer (6) which partially electrically disconnects the electrically conductive layer (4) from the electrodes (2, 3) of the electrode system (1).

11. Measurement device according to one of Claims 8 to 10, **characterized in that** the electrodes (2, 3) of the electrode system (1) have an even number of electrode fingers.

## Revendications

1. Procédé de détection de particules dans un écoulement de gaz à l'aide d'une sonde (11) qui présente la structure suivante :
un système (1) d'électrodes qui présente au moins deux électrodes (2, 3),
une couche électriquement conductrice (4),
la couche électriquement conductrice (4) mettant en contact électrique les deux ou plusieurs électrodes (2, 3) du système (1) d'électrodes et
la couche électriquement conductrice (4) présentant à température ambiante une résistance d'une valeur ≥ 0,2 kΩ à ≤ 100 MΩ,
**caractérisé en ce que**
une tension est appliquée sur le système (1) d'électrodes de telle sorte que le système (1) d'électrodes et la couche électriquement conductrice (4) puissent être utilisés en fonction de la tension appliquée sur le système (1) d'électrodes comme
dispositif de mesure en vue de la détection de particules dans un écoulement de gaz,
dispositif de chauffage en vue de la régénération de la sonde (11) ou
dispositif de mesure de température en vue de déterminer la température de la sonde (11).

2. Procédé selon la revendication 1, **caractérisé en ce que** dans une phase de mesure, une tension de mesure est appliquée sur le système (1) d'électrodes et **en ce que** l'intensité du courant, la chute de tension et/ou la résistance électrique qui s'établissent par dépôt de particules soient mesurées et soient délivrées comme mesures de la concentration et/ou de l'écoulement massique des particules.

3. Procédé selon la revendication 2, **caractérisé en ce que** dans une phase de régénération qui suit la phase de mesure, les particules déposées sont éliminées en partie ou en totalité en appliquant sur le système (1) d'électrodes une tension de régénération supérieure à la tension de mesure.

4. Procédé selon la revendication 3, **caractérisé en ce que** la tension de régénération est de 10 à 1 000 fois plus élevée que la tension de mesure.

5. Procédé selon l'une des revendications précédentes, **caractérisé en ce que** le niveau de la tension de régénération est établi de telle sorte que la puissance de régénération établie par application de la tension de régénération soit de 100 à 1 000 000 de fois plus élevée que la puissance de mesure établie à la fin de la phase de mesure par l'application de la tension de mesure.

6. Procédé selon l'une des revendications précédentes, **caractérisé en ce que** le niveau de la tension de régénération est modifié en maintenant constant le rapport entre la puissance de régénération et la puissance de mesure.

7. Procédé selon l'une des revendications précédentes, **caractérisé en ce qu'**après l'élimination partielle ou complète des particules déposées dans la phase de régénération, une mesure de résistance est exécutée et **en ce que** la valeur de la résistance qui en résulte est comparée à un examen réalisé précédemment de la dépendance de la résistance vis-à-vis de la température, en vue de déterminer la température.

8. Appareil de mesure destiné à détecter des particules dans un écoulement de gaz, l'appareil comprenant :
une sonde (11), la sonde présentant
un système (1) d'électrodes qui compte au moins deux électrodes (2, 3) et
une couche électriquement conductrice (4),
la couche électriquement conductrice (4) mettant en contact électrique les deux ou plusieurs électrodes (2, 3) du système (1) d'électrodes et
la couche électriquement conductrice (4) présente à température ambiante une résistance d'une valeur ≥ 0,2 kΩ à ≤ 100 MΩ,
des moyens d'application d'une tension sur le système d'électrodes de la sonde,
**caractérisé en ce que**
l'appareil de mesure présente des moyens de chauffage destinés à régénérer la sonde et des moyens de mesure de température destiné à déterminer la température de la sonde, le chauffage étant obtenu par application d'une tension de régénération sur le système (1) d'électrodes, la mesure de la température étant obtenue par la mesure de la valeur de la résistance du système (1) d'électrodes.

9. Appareil de mesure selon la revendication 8, **caractérisé en ce que** la couche électriquement conductrice (4) comporte de l'oxyde de zirconium dopé ou de l'oxyde de zirconium non dopé dont les grains ont une taille de l'ordre des nm, de l'oxyde d'aluminium dopé, de l'oxyde de ruthénium dopé ou non dopé, de l'oxyde d'indium dopé ou non dopé, du carbure de silicium, du carbure de silicium lié par nitrure, du carbure de silicium et d'aluminium lié par nitrure et/ou une délafossite.

10. Appareil de mesure selon les revendications 8 ou 9, **caractérisé en ce que** la sonde (11) comporte en outre une couche isolante (6) qui sépare électriquement et partiellement la couche électriquement conductrice (4) des électrodes (2, 3) du système (1) d'électrodes.

11. Appareil de mesure selon l'une des revendications 8 à 10, **caractérisé en ce que** les électrodes (2, 3) du système (1) d'électrodes présentent un nombre pair de doigts d'électrode.
